(19) Europäisches Patentamt
European Patent Office
Office européen des brevets

(11) **EP 1 639 914 B1**

(12) **EUROPEAN PATENT SPECIFICATION**

(45) Date of publication and mention
of the grant of the patent:
**17.05.2017 Bulletin 2017/20**

(51) Int Cl.:
***A61B 17/34*** (2006.01)

(21) Application number: **04746050.6**

(86) International application number:
**PCT/JP2004/008535**

(22) Date of filing: **17.06.2004**

(87) International publication number:
**WO 2004/112536 (29.12.2004 Gazette 2004/53)**

(54) **ELECTRIC TOOTHBRUSH**

ELEKTRISCHE ZAHNBÜRSTE

BROSSE A DENTS ELECTRIQUE

(84) Designated Contracting States:
**AT BE BG CH CY CZ DE DK EE ES FI FR GB GR
HU IE IT LI LU MC NL PL PT RO SE SI SK TR**

(30) Priority: **20.06.2003 JP 2003177337**

(43) Date of publication of application:
**29.03.2006 Bulletin 2006/13**

(73) Proprietor: **SUNSTAR INC.**
**Takatsuki-shi,
Osaka 569-1195 (JP)**

(72) Inventors:
• **MORI, Toyokazu**
**Takatsuki-shi,
Osaka 569-1195 (JP)**

• **KITA, Seiji**
**Takatsuki-shi,
Osaka 569-1195 (JP)**
• **UESAKI, Syoko**
**Takatsuki-shi,
Osaka 569-1195 (JP)**

(74) Representative: **Vossius & Partner
Patentanwälte Rechtsanwälte mbB
Siebertstrasse 3
81675 München (DE)**

(56) References cited:
WO-A-02/102187            JP-A- 11 513 922
JP-A- 2003 144 229      US-A- 5 448 792
US-A- 5 974 615            US-A1- 2003 084 528

## Description

BACKGROUND ART

The present invention relates to an electric toothbrush.

Electric toothbrushes comprising conversion means, which converts the rotary movement of a rotation shaft of a motor into a back-and-forth movement of the output shaft in the axial direction via a crank mechanism, gear mechanism and cam mechanism, have been widely used (see, for example, Japanese Patent Publication No. H4-364806). In the electric toothbrushes of this type, usually the distance of movement of tuft connecting the output shaft is set at 3-7 mm and the frequency of back-and-forth motion of the output shaft per minute is set at 1,000-3,000.

In recent years, electric toothbrushes with the distance of movement of tuft connecting the output shaft of about 1 mm and the frequency of back-and-forth motion of the output shafts per minute of about 15,000 attained by using a linear drive or magnetic forces have also come to use.

The electric toothbrush described in Japanese Patent Publication No. H4-364806 can be driven by a common DC electric motor driven, e.g., by a battery. Therefore, the electric toothbrush can be manufactured at a low cost. Furthermore, such an electric toothbrush also indicates a good plaque removal. However, the problem is that if the toothbrush is used by a patient with gingivitis, the gum is damaged due to the distance of movement of tuft is too large.

On the other hand, in the electric toothbrush using a linear drive or magnetic forces, the distance of movement of tuft connecting the output shaft is as small as 1 mm, therefore damage to the gum is decreased. However, the plaque removal is degraded by comparison with that of the usual electric toothbrush. Another problem is that production cost is increased because special parts are required.

US 5,974,615 discloses an electric toothbrush, wherein a bristle head with bristles is moved back and forth, wherein the distance of the bristle head and the frequency of the back-and-forth motion are set in the range of 0.04mm to 0.4mm and in the range of 130Hz to 200Hz, respectively. The bristle head is moved back and forth linearly in the extending direction of the bristles.

WO 02/102187 discloses a power toothbrush, wherein a brush base portion with brush staples is moved back and forth in a longitudinal direction of the toothbrush. The brush base portion may be reciprocally moved with a stroke in a range of 0.5mm to 5mm and a frequency in a range of 20Hz to 300Hz. The brush staples are planted on respective floating base members so that the brush staples are floatingly movable relative to the brush base portion in the extending direction of the brush staples.

Document US5,448,792 discloses an electric toothbrush, wherein a bristle head is moved in a rectilinear movement in the direction of the longitudinal axis of the brush shank with a frequency higher than 30Hz and an amplitude of movement between 0.1 and 5 mm or with a frequency of between 60Hz and 70Hz and an amplitude of 2 mm.

Document US2003/0084528 discloses an electric toothbrush with a bristle holder having a back and forth movement with an amplitude between about 1 mm and about 6 mm in one embodiment and between about 2 mm and about 4 mm in another embodiment.

It is an object of the present invention to provide an electric toothbrush superior in plaque removal, producible at a low cost, and utilized without damaging gum even by a patient with gingivitis.

DISCLOSURE OF THE INVENTION

The applicant considered various uses of tools for oral hygiene and conducted a comprehensive study of electric toothbrushes that can be advantageously used even by a patient with gingivitis and can increase plaque removal. The results obtained demonstrated that this object can be attained by setting appropriately the distance of movement of tuft and the frequency of back-and-forth motion. This finding led to the creation of the present invention. In the present specification, the frequency of back-and-forth motion means the number of cycles, where one back-and-forth linear movement of the tufted portion is taken as one cycle. Furthermore, the distance of movement of tuft means the distance (amplitude), in millimeter units, of back-and-forth linear movement of the tufted portion in the electric toothbrush. An electric toothbrush according to the invention is defined by claim 1. A preferred embodiment is according to the dependent claim.

BRIEF DESCRIPTION OF THE DRAWINGS

FIG. 1 is a longitudinal sectional view of the electric toothbrush;
FIG. 2 is an explanatory drawings of the conversion means of the electric toothbrush;
FIG. 3 is a front view of the device for evaluation;

FIG. 4 is a top view of the device for evaluation;

FIG. 5 is an explanatory drawing of the teeth which are evaluated;

FIG. 6 is an explanatory drawing of interproximal portion of the teeth; and

FIG. 7 is a graph illustrating the relationship between the distance of movement of the tuft and the frequency of back-and-forth motion in interproximal portion.

BEST MODE FOR CARRYING OUT THE INVENTION

The present invention can be applied to an electric toothbrush of any structure in which brushing is enabled by moving a tufted portion, provided that the product of the distance (mm) of movement of the tufted portion and the frequency (times) of back-and-forth motion per minute is set in the range of 5000-7000 The present disclosure describes also an electric toothbrush of any structure in which brushing is enabled by moving a tufted portion, the distance, x (mm), of movement of the tufted portion and the frequency, y (times), of back-and-forth motion per minute are set in a range satisfying the following formula.

$$y = ax + b,$$

Where $a = -3000$, $10,000 \leqq b \leqq 12,500$, $x > 0$.

The distance, x (mm), of movement of the tufted portion can be set at any value, but if it is too small, the plaque removal ratio decreases, and if the distance is too larger, the gum is easily damaged. Accordingly, the distance is preferably set at 0.3-0.7 mm.

The frequency of back-and-forth motion of the tufted portion per minute can be set at any value, but if it is too small, the sufficient brushing effect is not obtained, and if it is too large, special expensive parts have to be used. Accordingly, the frequency is preferably set at 8,000-13,000.

Even when the product of the distance (mm) of movement of the tuft and the frequency (times) of back-and-forth motion is not contained in the above-described range, or when the above-described formula $y = ax + b$ is not valid, the specifications in which the distance (mm) of movement of the tufted portion is set at 0.3-0.7 mm and the frequency of back-and-forth motion of the tufted portion per minute is set at 8,000-13,000 can be contained in the present invention.

The electric toothbrush can have any specification, provided that the tufted portion is linearly moved. Thus, electric toothbrushes of various specifications can be utilized, examples thereof including an electric toothbrush comprising conversion means for converting the rotation movement of a motor via a crank mechanism into the back-and-forth linear movement of an output shaft connecting a replaceable brush thereon, or an electric toothbrush comprising conversion means for converting the rotation movement of a motor via a gear mechanism and a cam mechanism into the back-and-forth linear movement of an output shaft connecting a replaceable brush thereon.

An actual example of the electric toothbrush will be described below.

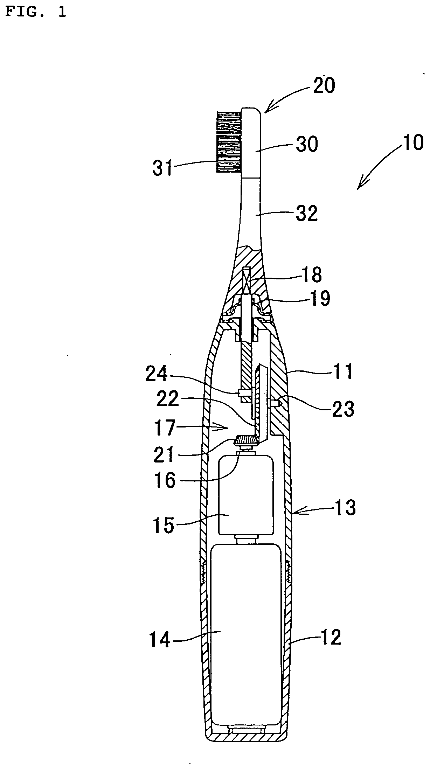

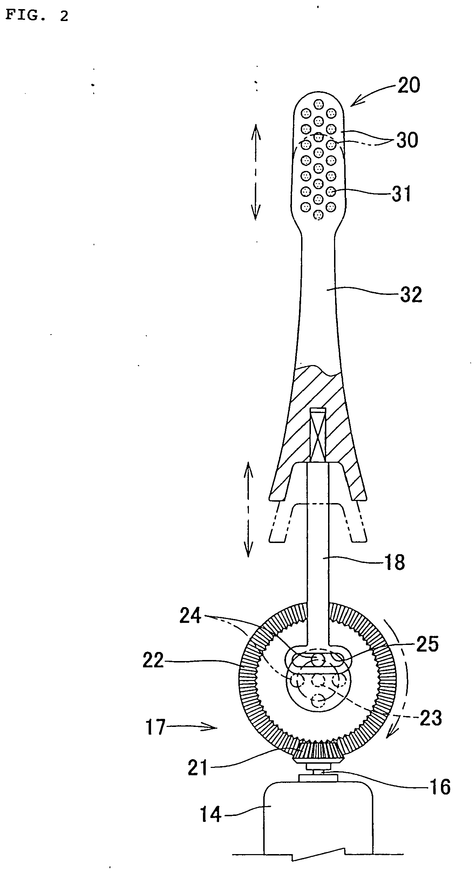

As shown in FIG. 1 and FIG. 2, an electric toothbrush 10 comprises a casing 13 also serving as a handle and having a structure partitioned into an upper casing 11 and a lower casing 12. The upper and lower casings 11, 12 are detachably joined.

A battery 14 is contained, so that it can be replaced, inside the lower portion of the casing 13, a DC electric motor 15 is incorporated in the intermediate portion of the casing 13. The motor 15 can be switched ON and OFF with a switch (not shown in the figure) assembled with the casing 13.

Conversion means 17 for converting the rotation movement of a rotation shaft 16 of the motor 15 into the linear movement in the vertical direction of the output shaft 18 is provided inside the upper portion of the casing 13. The output shaft 18 is provided so that it is able to move in the vertical direction through an upper wall portion of the casing 13 in the intermediate section thereof. A rubber cover 19 is provided in the upper end section of the casing 13 so as to prevent water or the like from penetrating from the sliding portion of the output shaft 18 and casing 13. A replaceable brush 20 is detachably mounted on the upper half of the output shaft 18 protruding upward from the casing 13.

The conversion means 17 will be explained below. A first bevel gear 21 is fixedly mounted on the rotation shaft 16 of the motor 15. A second bevel gear 22, which is engaged with the first bevel gear 21, is provided, so that it can rotate about a shaft section 23, in the inner wall section of the upper casing 11. A slit for cam 25 is provided in the horizontal direction in the lower end section of the output shaft 18, and an engagement pin 24 extending inside the slit 25 is protruded in the eccentric position of the second bevel gear 22. The rotation movement of the rotation shaft 16 of the motor 15 around the center of the axis in the vertical direction is converted by the first and second bevel gears 21, 22 into the rotation movement of the shaft section 23 around the axis center in the horizontal direction, and this rotation movement is converted into back-and-forth linear movement of the output shaft 18 in the vertical direction via the slit 25 and engagement pin 24.

The number of cog in the gears 21, 22 is set so that the back-and-forth linear movement (frequency of back-and-forth motion) of the output shaft 18 in the vertical direction within 1 min is within the mentioned range of frequency of back-and-forth motion. Furthermore, the eccentricity of the engagement pin 24 with respect to the shaft section 23 of the second bevel gear 22 is set so that the distance of movement of the replaceable brush 20 in the vertical direction (distance of movement of the tuft) is within the mentioned range of the distance of movement of the tuft.

The replaceable brush 20 has a well-known specification in which the tufted portion 31 is formed in the head 30 connecting neck portion 32 detachably connected the output shaft 18. Any shape of the head 30, number of tufts, and arrangement thereof can be set. Furthermore, a method by which the tufts constructed by the filaments are fixed into holes for tuft provided in the head by the anchor and fused by heat can be advantageously used as the method for fixing tufts. Furthermore, any material, diameter, length, or shape of the tip end of the filaments can be utilized. Moreover, filaments which constructed by one material or composite material may be utilized. If the filaments in which only the tip end is split into a plurality of portion are used, because the roots of filaments are stable, the motions can be sufficiently transmitted to the tips. Accordingly such a specification is preferred. Furthermore, because such filaments with split tips improve the plaque removal, it is preferred that the number of filaments with split tips be at least 30% of the total number of filaments.

A device used for evaluating the plaque removal ratio will be explained below. The device 40 has a structure identical to that of the device described in Japanese Patent Publication No. H10-239304.

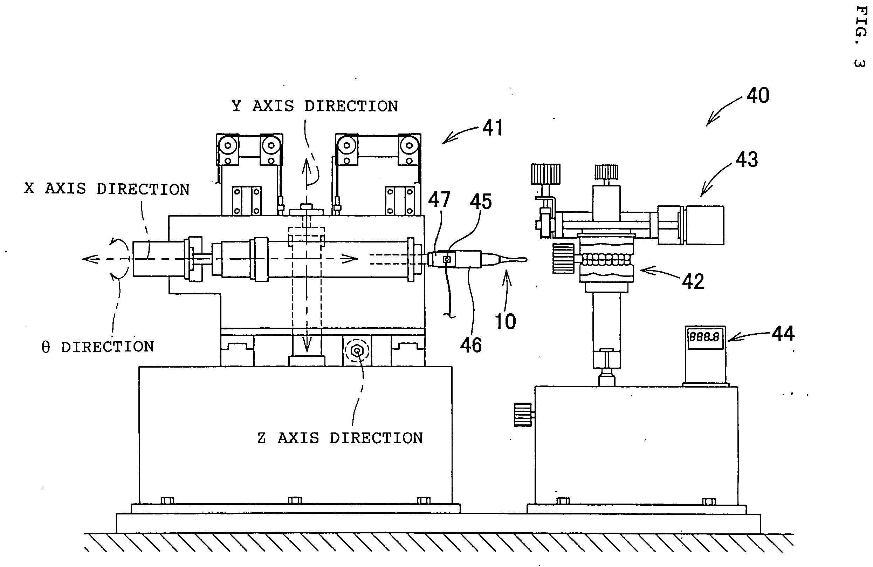

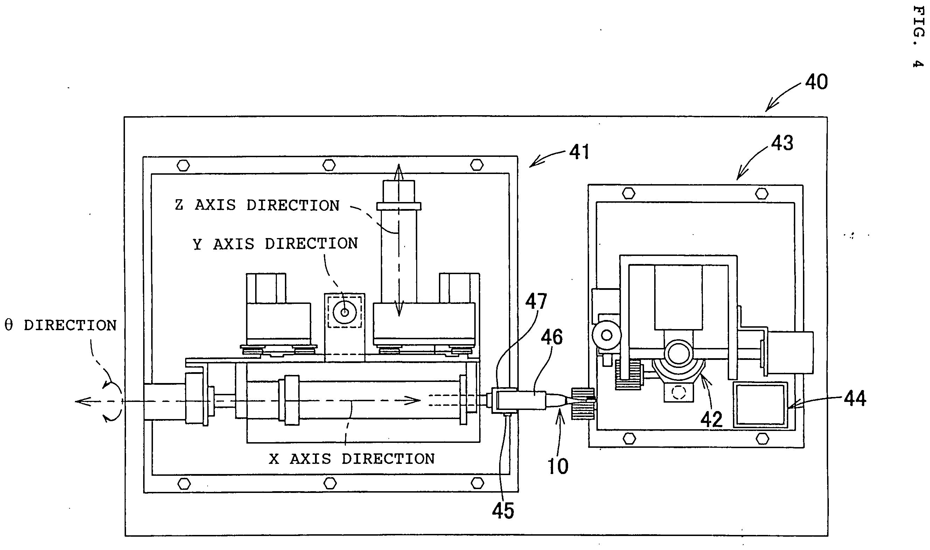

As shown in FIG. 3 and FIG. 4, the device 40 for evaluating the electric toothbrush 10 comprises operation means 41 for operating the electric toothbrush 10 in the three directions: X axis direction (left-right direction), Y axis direction (up-down direction), and Z axis direction (forward-backward direction), and rotating in the θ direction around the X axis, in the state where the electric toothbrush 10, which is to be tested, is held in the X axis direction, control means (not shown in the figure) for controlling the operation means 41 so that the electric toothbrush 10 held in the operation means 41 performs brushing by the desired brushing method, holding means 43 for holding a dental model 42 so that the position thereof can be controlled, so that the desired teeth of the dental model 42 face the tufted portion 31 of the electric toothbrush 10 held in the operation means 41, and measurement means 44 for measuring the brushing pressure of the electric toothbrush 10 on the dental model 42.

The measurement means 44 measured the pressure (brushing pressure) acting upon the tufted portion 31 of the electric toothbrush 10 based on the output of a strain gage 45. The strain gage 45 has a well-known specification comprising a resistor from a metal or a semiconductor and is attached to the front surface of a support frame 47 of a holder 46 provided for securely holding the electric toothbrush 10 on the operation means 41.

The method for evaluation of the electric toothbrush will be described below.

Electric toothbrushes of three types with the distance of movement of the tuft caused by back-and-forth linear movement of the tufted portion set at 0.5 mm, 1.0 mm, and 3.0 mm were used as the electric toothbrush. Furthermore, a replaceable brush was manufactured by arranging tufts in 3 rows, 23 tufts with a tuft hole diameter of 1.6 mm and filaments with a diameter of 0.160 mm and a length of 10 mm. The tip portions of the filaments were trimmed to flat and were end-rounded.

Then, the electric toothbrushes of the above-described three types were used for brushing the dental model 42 under the below-described conditions by changing the frequency of back-and-forth motion of the tufted portion per minute in 6 stages: 1,000, 2,000, 5,000, 7,000, 10,000, and 11,000, and the removal ratio of artificial plaque that was coated to the teeth of the dental model 42 was measured. The frequency of back-and-forth motion indicates the number of back-and-forth linear movements, where one back-and-forth movement of the tufted portion is counted as 1 cycle. Furthermore, the frequency of back-and-forth motion was adjusted by conducting voltage control of the electric toothbrush.

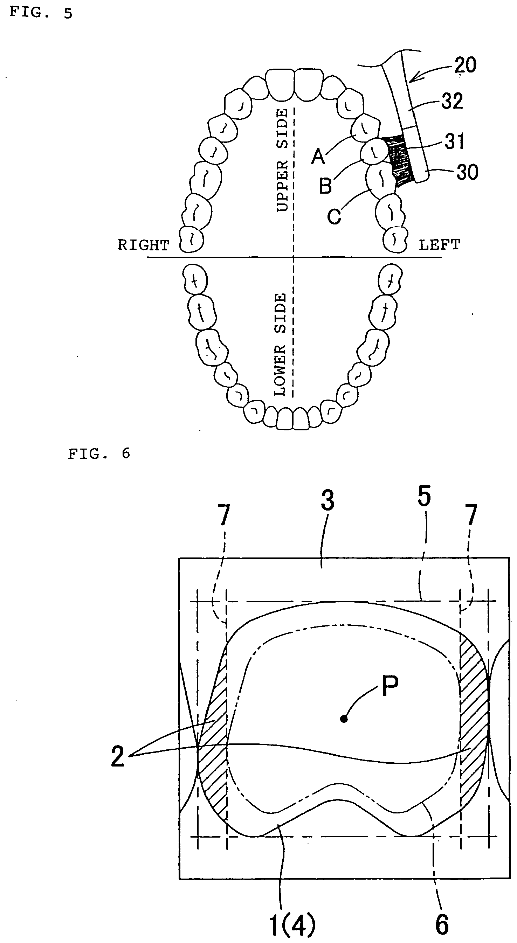

As shown in FIG. 5, the artificial plaque was coated on the 1st premolar A, second premolar B, and first molar C on the upper jaw side that were brushed in the dental model 42, the electric toothbrush 10 was driven at the prescribed frequency of back-and-forth motion, the brushing was conducted by moving the electric toothbrush from the first molar C to the first premolar A (forward) at a movement speed 3.16 mm/sec, under a brushing pressure of 150 g.

After the three teeth A, B, C of the dental model 42 have thus been brushed, the plaque removal ratio in the regions of interproximal portions of the teeth A, B, C that were set in the followings was found by image analysis. The results are shown in Table 1.

A method for setting a interproximal portion 2 of a tooth 1 will be explained below. As shown in FIG. 6, first, the buccal side surface of the tooth 1 downside from a gum 3 was picked up with a photographic means, and the center P of the rectangular frame 5, which is in contact with the outer shape of the standard image 4 of the tooth 1, was found. Then, the reduced image 6 obtained by reducing the standard image 4 to 80% was generated and the two images 4 and 6 were superimposed so that the centers P thereof were superimposed. The standard image 4 was then delineated with lines 7 that touch the reduced image 6 and the region shown by hatching on the outside of the lines 7 was set as an interproximal portion 2.

Table 1

| Frequency of back-and-forth motions y (times) | Distance of movement of tufts x (mm) | Product of x and y | Evaluation |
|---|---|---|---|
| 2000 | 0.5 | 1000 | × |
| 2000 | 1 | 2000 | × |
| 5000 | 0.5 | 2500 | × |
| 1000 | 3 | 3000 | Δ |
| 7000 | 0.5 | 3500 | Δ |
| 5000 | 1 | 5000 | ○ |
| 10000 | 0.5 | 5000 | ○ |
| 11000 | 0.5 | 5500 | ○ |
| 2000 | 3 | 6000 | ○ |
| 7000 | 1 | 7000 | ○ |
| 10000 | 1 | 10000 | × |
| 5000 | 3 | 15000 | × |
| 7000 | 3 | 21000 | × |

<Standard for evaluation>

○ Removal ratio is 50% or more

Δ Removal ratio is more than 36% and less than 50%

× Removal ratio is less than 36%

As shown in Table 1, when the product of the distance (mm) of movement of the tufted portion and the frequency (times) of back-and-forth motion per minute is 10,000 or more and 2,500 or less, the plaque removal ratio is 35% or less and sufficient plaque removal cannot be ensured, whereas an optimum state is obtained when this product is between 2,500 and 10,000. Furthermore, in the case of a patient with gingivitis, the distance of movement of the tuft has to be decreased, for example, when the distance of movement of the tuft is set at 0.5 mm, it is preferred that the frequency of back-and-forth motion per minute be set within a comparatively narrow range of 10,000 to about 11,000.

Furthermore, excellent plaque removal ratio was obtained when the distance (mm) of movement of the tufted portion and the frequency (times) of back-and-forth motion per minute were set as follows: the frequency of 10,000 at the distance 0.5 mm, 7,000 at 1.0 mm, and 2,000 at 3.0 mm. For this reason, the relationship between the distance, x (mm), of movement of the tufted portion and the frequency, y, of back-and-forth motion per minute in those three cases was approximated by a linear formula and the following formula was obtained.

$$y = -3000x + 10833 \quad (\text{correlation factor: } R^2 = 0.9643)$$

Furthermore, the range was set under a proviso that the plaque removal ratio is 42% or higher, and the following formula was obtained.

$$y = ax + b.$$

where a = -3000, $10,000 \leqq b \leqq 12,500$, x > 0.

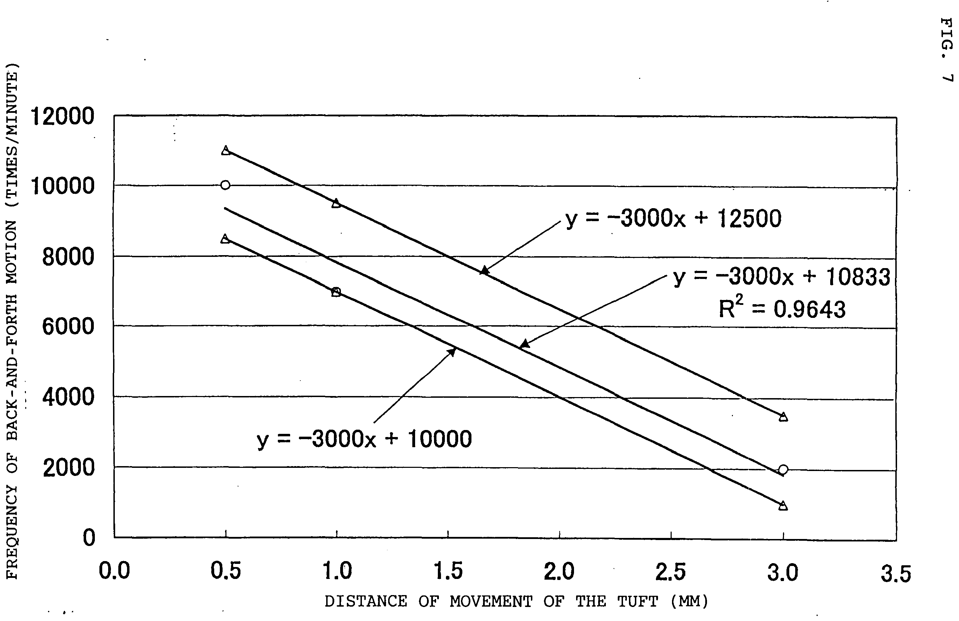

The graph is shown in FIG. 7. FIG. 7 demonstrates that the plaque removal ratio changed under the effect of the distance of movement of the tuft and frequency of back-and-forth motion, and at least when the distance of movement of the tuft is 0.5 mm to 3.0 mm and the frequency of back-and-forth motion is 2,000-10,000, it is preferred that the frequency of back-and-forth motion be set lower as the distance of movement of the tuft increases. Furthermore, in the case of a patient with gingivitis, sufficient plaque removal ratio can be ensured similarly to the common electric toothbrush by setting the frequency of back-and-forth motion appropriately, while avoiding the problem of damaging the gum by decreasing the distance of movement of the tuft.

**Claims**

1. An electric toothbrush comprising:

    conversion means (17) for converting rotation movement of a motor (15) into back-and-forth linear movement of an output shaft (18); and
    a replaceable brush (20) detachably mounted on the output shaft (18), the replaceable brush (20) including:

        a neck portion (32) detachably connected to the output shaft (18); and
        a tufted portion (31) formed by fixing a plurality of tufts in a head (30) connecting to the neck portion (32),
        wherein brushing is enabled by back-and-forth linear movement of the tufted portion (31) along with the replaceable brush (20) in an axial direction of the output shaft (18),
        wherein a distance (mm) of movement of the tufted portion (31) is set in the range of 0.5-3.0 mm and a frequency (times) of the back-and-forth motion of the tufted portion (31) per minute is set in the range of 2,000-11,000, and
        the product of the distance (mm) of movement of the tufted portion and the frequency (times) of the back-and-forth motion of the tufted portion (31) per minute is set in the range of 5000-7000.

2. The electric toothbrush according to claim 1,
    wherein filaments in which tip portions of at least 30% or more of all tufted filaments are split into a plurality of portions are used.

**Patentansprüche**

1. Elektrische Zahnbürste aufweisend:

    Wandlungseinrichtungen (17) zum Wandeln einer Rotationsbewegung eines Motors (15) in eine lineare Hin-und-Her-Bewegung einer Abtriebswelle (18); und
    eine austauschbare Bürste (20), die lösbar an der Abtriebswelle (18) angebracht ist, wobei die austauschbare Bürste (20) aufweist:

        einen Halsabschnitt (32), der lösbar mit der Abtriebswelle (18) verbunden ist; und
        einen Borstenbereich (31), der durch Befestigen mehrerer Borsten in einem mit dem Halsabschnitt (32) verbundenen Kopf (30) gebildet ist,
        wobei ein Bürsten durch eine lineare Hin-und-Her-Bewegung des Borstenbereichs (31) gemeinsam mit der austauschbaren Bürste (20) in eine axiale Richtung der Abtriebswelle (18) ermöglicht ist,
        wobei eine Strecke (mm) der Bewegung des Borstenbereichs (31) in einem Bereich von 0,5 bis 3,0 mm festgesetzt ist und eine Frequenz (Anzahl) der Hin-und-Her-Bewegung des Borstenbereichs (31) pro Minute im Bereich von 2000 bis 11000 festgesetzt ist, und
        das Produkt aus der Bewegungsstrecke (mm) des Borstenbereichs und der Frequenz (Anzahl) der Hin-und-Her-Bewegung des Borstenbereichs (31) pro Minute im Bereich von 5000 bis 7000 festgesetzt ist.

2. Elektrische Zahnbürste nach Anspruch 1, wobei Filamente verwendet werden, in denen Spitzenabschnitte von mindestens 30% oder mehr aller Borstenfilamente in mehrere Abschnitte aufgeteilt sind.

**Revendications**

1. Brosse à dents électrique comprenant :

des moyens de conversion (17) pour convertir un mouvement de rotation d'un moteur (15) en un mouvement linéaire d'aller et retour d'un axe de sortie (18) ; et

une brosse remplaçable (20) montée de manière amovible sur l'axe de sortie (18), la brosse remplaçable (20) incluant :

une partie de col (32) reliée de manière amovible à l'axe de sortie (18) ; et

une partie touffue (31) formée en fixant une pluralité de touffes dans une tête (30) reliée à la partie de col (32), dans laquelle un brossage est réalisé par un mouvement linéaire d'aller et retour de la partie touffue (31) conjointement avec la brosse remplaçable (20) dans une direction axiale de l'axe de sortie (18),

dans laquelle une distance (mm) de déplacement de la partie touffue (31) est réglée dans la plage de 0,5-3,0 mm et une fréquence (fois) du mouvement d'aller et retour de la partie touffue (31) par minute est réglée dans la plage de 2.000-11.000, et

le produit de la distance (mm) de déplacement de la partie touffue et de la fréquence (fois) du mouvement d'aller et retour de la partie touffue (31) par minute est réglé dans la plage de 5.000-7.000.

2. Brosse à dents électrique selon la revendication 1,
dans laquelle des filaments dans lesquels des parties d'extrémité d'au moins 30% ou plus de tous les filaments mis en touffes sont séparées en une pluralité de parties sont utilisés.

FIG. 1

FIG. 2

FIG. 3

Y AXIS DIRECTION

41

X AXIS DIRECTION

47  45

θ DIRECTION

46

10

Z AXIS DIRECTION

40

43

42

44

888.8

FIG. 4

EP 1 639 914 B1

θ DIRECTION

Z AXIS DIRECTION

Y AXIS DIRECTION

X AXIS DIRECTION

40

41

43

47

46

45

10

42

44

FIG. 5

FIG. 6

**FIG. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H4364806 B
- US 5974615 A
- WO 02102187 A

- US 5448792 A
- US 20030084528 A
- JP H10239304 B